# EUROPEAN PATENT APPLICATION

(11) **EP 3 273 011 A1**
(43) Date of publication of application: **24.01.2018**
(21) Application number: 17179372.2
(22) Date of filing: 03.07.2017
(51) Int. Cl.: F01D 25/24, F01D 25/28, F02C 7/24, F02C 7/32, F16B 43/00, F16J 15/10, F16L 23/16

(54) **THERMAL WASHER FOR A COMPOSITE BOSS**

(30) Priority: 01.07.2016 US 201615200491
(71) Applicant: United Technologies Corporation, Farmington, CT 06032 (US)
(72) Inventor: STRAIT, Mathieu, Rocky Hill, CT 06067 (US); ISLAM, Mainul, Bolton, CT 06043 (US)
(74) Representative: Hull, James Edward

(57) **Abstract**

A thermal washer (230) may comprise a first metallic plate (310) having a first inner surface (312) and a first outer surface (314), a second metallic plate (320) having a second inner surface (322) and a second outer surface (324), the second metallic plate (320) being oriented substantially parallel to the first metallic plate (310) such that the first inner surface (312) and the second inner surface (322) are separated by a gap, and a thermal wool (350) in contact with the first inner surface (312) and the second inner surface (322), the thermal wool (350) filling a void between the first inner surface (312) and the second inner surface (322). A width of the thermal wool (350) may be substantially equal to a width of the first metallic plate (310) and a length of the thermal wool (350) may be substantially equal to a length of the first metallic plate (310).

## Description

### FIELD

This disclosure relates generally to gas turbine engines, and more particularly to thermally insulating connections.

### BACKGROUND

Gas turbine engines generally incorporate a fan case within which a fan rotates. Various components may be attached to a distal surface of the fan case. Such components may include ducts for directing the flow of hot gases, from a compressor section of the gas turbine engine for example. Composite fan cases may have temperature restrictions for components anchored to the fan case.

### SUMMARY

Systems and methods for thermal washers are described herein, in accordance with various embodiments.

A thermal washer may comprise a first metallic plate having a first inner surface and a first outer surface, a second metallic plate having a second inner surface and a second outer surface, the second metallic plate being oriented substantially parallel to the first metallic plate such that the first inner surface and the second inner surface are separated by a gap, and a thermal wool in contact with the first inner surface and the second inner surface, the thermal wool filling a void between the first inner surface and the second inner surface, wherein a width of the thermal wool is substantially equal to a width of the first metallic plate and a length of the thermal wool is substantially equal to a length of the first metallic plate.

In various embodiments, a first aperture may be disposed in the thermal washer, the first aperture having a first centerline axis being substantially perpendicular to the first metallic plate and the second metallic plate. A second aperture may be disposed in the thermal washer, the second aperture having a second centerline axis being substantially perpendicular to the first metallic plate and the second metallic plate. The thermal wool may comprise a high temperature mineral wool insulation. The thermal wool may comprise a semi-rigid sheet. The first metallic plate and the second metallic plate may comprise aluminum. The first metallic plate may be coupled to the thermal wool via an adhesive and the second metallic plate may be coupled to the thermal wool via the adhesive. A width of the second metallic plate may be substantially equal to the width of the first metallic plate and a length of the second metallic plate may be substantially equal to the length of the first metallic plate. A thickness of the thermal wool may be between 100% and 2,000% of a thickness of the first metallic plate.

A fan case arrangement may comprise a composite fan case, a composite member coupled to the composite fan case, a duct for directing a hot fluid, and a thermal washer. The thermal washer may comprise a first metallic plate, a second metallic plate, and a thermal wool located between the first metallic plate and the second metallic plate, the thermal wool being flush with first metallic plate and second metallic plate at an outer side of the thermal washer, wherein the thermal washer is coupled between the composite member and the duct.

In various embodiments, the first metallic plate may have a first inner surface and a first outer surface. The second metallic plate may have a second inner surface and a second outer surface, the second metallic plate being oriented substantially parallel to the first metallic plate such that the first inner surface and the second inner surface are separated by a gap. The thermal wool may be in contact with the first inner surface and the second inner surface, the thermal wool filling a void between the first inner surface and the second inner surface. A thermal communication between the first metallic plate and the second metallic plate may be minimized via the thermal wool. The first metallic plate may be in thermal communication with the duct and the second metallic plate may be in thermal communication with the composite member. A first aperture may be disposed in the thermal washer, the first aperture having a first centerline axis being substantially perpendicular to the first metallic plate and the second metallic plate and a second aperture may be disposed in the thermal washer, the second aperture having a second centerline axis being substantially perpendicular to the first metallic plate and the second metallic plate. The fan case arrangement may further comprise an attachment feature for attaching the duct to the composite member, the attachment feature being coupled between the duct and the thermal washer. A fastener may be located at least partially within at least one of the first aperture or the second aperture to fasten the duct to the composite member. The composite fan case may comprise a fan case boss.

A method for thermally insulating a high temperature member from a composite member may comprise coupling a first metallic plate to a thermal wool, coupling a second metallic plate to the thermal wool to form a thermal washer, coupling the high temperature member to the first metallic plate, and coupling the composite member to the second metallic plate.

In various embodiments, at least one of the coupling the high temperature member to the first metallic plate or coupling the composite member to the second metallic plate may comprise inserting a fastener into an aperture disposed in the thermal washer. The coupling the second metallic plate to the thermal wool may comprise coupling the second metallic plate to a second surface of the thermal wool, the first metallic plate being coupled to a first surface of the thermal wool, the first surface and the second surface being located on opposite sides of the thermal wool.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

Figure 1 illustrates an example gas turbine engine having a hot duct, in accordance with various embodiments;
Figure 2 illustrates a cross-section view of a fan case arrangement, in accordance with various embodiments;
Figures 3A and 3B illustrate an exploded view and a perspective view of a thermal washer, respectively, in accordance with various embodiments; and
Figure 4 illustrates method for thermally insulating a high temperature member from a composite member, in accordance with various embodiments.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the disclosure, it should be understood that other embodiments may be realized and that logical changes and adaptations in design and construction may be made in accordance with this disclosure and the teachings herein. Thus, the detailed description herein is presented for purposes of illustration only and not of limitation. The scope of the disclosure is defined by the appended claims. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact. Surface shading lines may be used throughout the figures to denote different parts but not necessarily to denote the same or different materials. In some cases, reference coordinates may be specific to each figure.

As used herein, "distal" refers to the direction radially outward, or generally, away from the axis of rotation of a turbine engine. As used herein, "proximal" refers to a direction radially inward, or generally, towards the axis of rotation of a turbine engine.

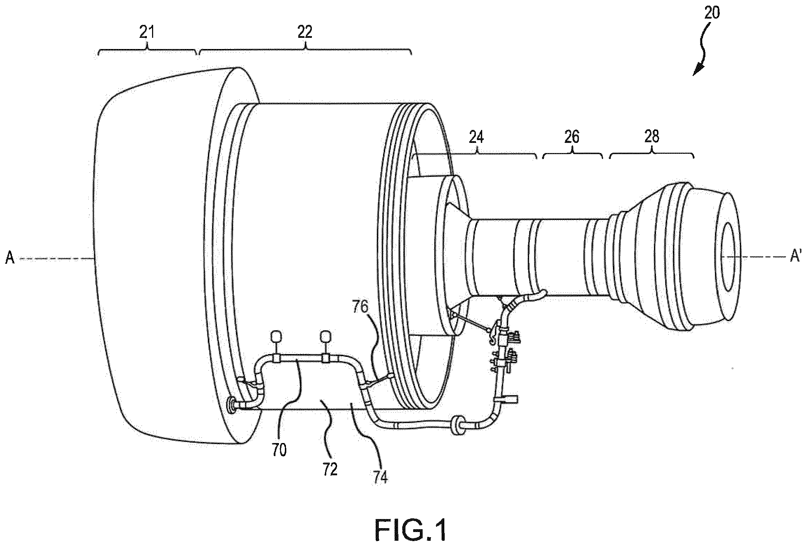

In various embodiments and with reference to FIG. 1, a gas turbine engine 20 is provided. Gas turbine engine 20 may be a two-spool turbofan that generally incorporates an inlet section 21, a fan section 22, a compressor section 24, a combustor section 26 and a turbine section 28. Alternative engines may include, for example, an augmenter section among other systems or features. In operation, fan section 22 can drive air along a bypass flow-path while compressor section 24 can drive air for compression and communication into combustor section 26 then expansion through turbine section 28. Although depicted as a turbofan gas turbine engine 20 herein, it should be understood that the concepts described herein are not limited to use with turbofans as the teachings may be applied to other types of gas turbine engines including three-spool architectures.

In various embodiments, fan section 22 may include fan case (also referred to herein as composite fan case) 74. Fan case 74 may comprise a composite structure. A duct, such as duct 70, may be coupled to a distal surface, i.e., surface 72, of fan case 74. In various embodiments, duct 70 may be coupled to fan case 74 via an attachment feature 76. Duct 70 may supply a high temperature fluid to various sections of engine 20. For example, duct 70 may supply air from compressor section 24 to inlet section 21 for de-icing purposes. Air from compressor section 24 may reach temperatures of up to 1,200° F (648.9°C) or more.

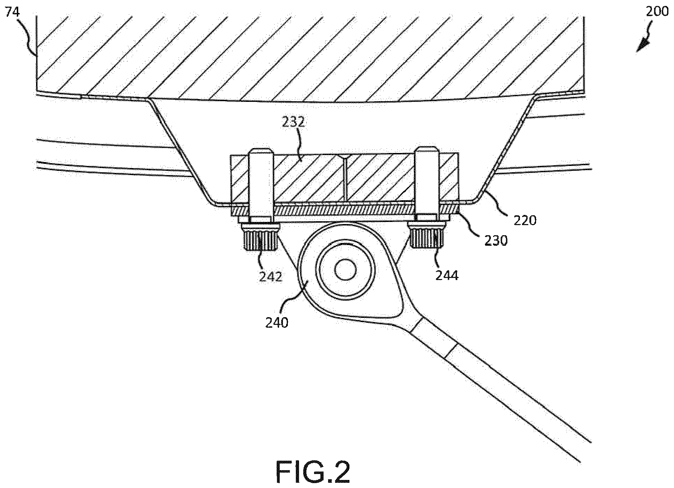

With respect to FIG. 2, elements with like element numbering, as depicted in FIG. 1, are intended to be the same and will not necessarily be repeated for the sake of clarity.

With reference to FIG. 2, a cross-section view of fan case arrangement 200 is illustrated, in accordance with various embodiments. Fan case arrangement 200 may comprise fan case 74, composite member 220, and thermal washer 230. In various embodiments, fan case arrangement 200 may further comprise attachment feature 240. Attachment feature 240 may be for attaching or otherwise coupling duct 70 (see FIG. 1) to composite member 220. Attachment feature 240 may be similar to attachment feature 76 (see FIG. 1). Composite member 220 may comprise and/or be referred to as a fan case boss. A cross-section view of composite member 220 may generally comprise a geometry similar to that of an isosceles trapezoid, as illustrated in FIG. 2. Composite member 220 may be coupled to fan case 74. Composite member 220 may extend radially outward from fan case 74.

Thermal washer 230 may be located between attachment feature 240 and composite member 220. With momentary reference to FIG. 1, thermal washer 230 may be for minimizing thermal communication between attachment feature 240 and/or duct 70 (see FIG. 1). Stated another way, thermal washer 230 may prevent heat from being transferred from attachment feature 240 and/or duct 70 to composite member 220 and/or fan case 74. Thermal washer 230 may thus minimize conductive heat transfer.

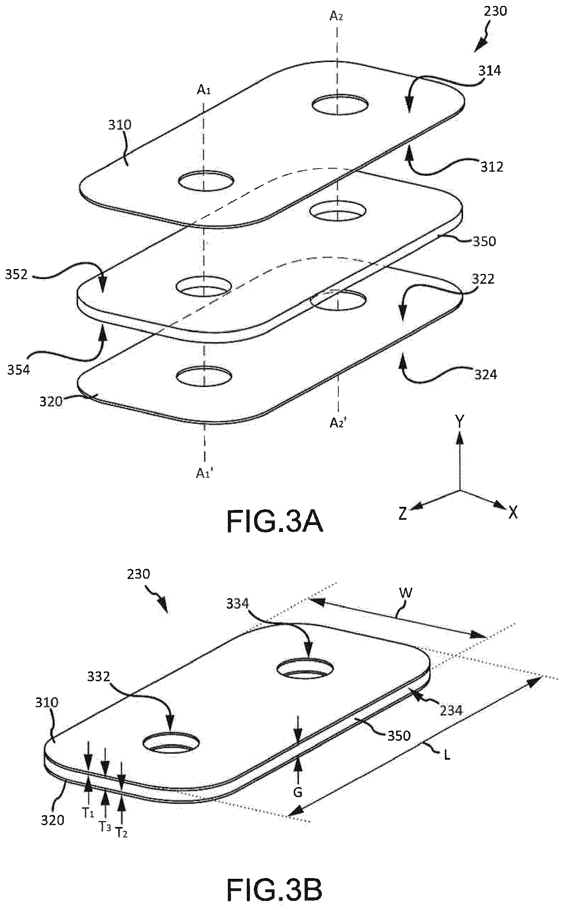

With combined reference to FIG. 2 and FIG. 3B, thermal washer 230 and attachment feature 240 may be coupled to composite member 220 via a first fastener 242 and a second fastener 244. In this regard, thermal washer 230 may comprise a first aperture 332 for receiving first fastener 242 and a second aperture 334 for receiving second fastener 244. In various embodiments, first fastener 242 may comprise a bolt or the like. Second fastener 244 may be similar to first fastener 242. First fastener 242 and second fastener 244 may be for coupling duct 70 (see FIG. 1) to composite member 220. An insert 232 may be coupled to composite member 220 for accepting first fastener 242 and second fastener 244. First fastener 242 and second fastener 244 may threadingly engage with insert 232. In this regard, insert 232 may couple composite member 220 via fasteners (i.e., first fastener 242 and second fastener 244).

With reference to FIG. 3A and FIG. 3B, an exploded view and a perspective view of thermal washer 230 are illustrated, in accordance with various embodiments. Xyz-axes are provided for ease of illustration. Thermal washer 230 may comprise a first metallic plate 310, a second metallic plate 320, and a thermal wool 350. The outer side 234 of thermal washer 230 may span the perimeter of thermal washer 230. In various embodiments, thermal wool 350 may comprise a semi-rigid sheet. In various embodiments, first metallic plate 310 and second metallic plate 320 may comprise aluminum.

First metallic plate 310 may comprise an inner surface (also referred to herein as a first inner surface) 312 and an outer surface (also referred to herein as a first outer surface) 314. Second metallic plate 320 may comprise an inner surface (also referred to herein as a second inner surface) 322 and an outer surface (also referred to herein as a second outer surface) 324. First metallic plate 310 may be oriented substantially parallel to second metallic plate 320. Inner surface 312 and inner surface 322 may be separated by a gap G. Thermal wool 350 may occupy the void defined by gap G. Stated another way, thermal wool 350 may be located between first metallic plate 310 and second metallic plate 320. Thermal wool 350 may be in contact with inner surface 312 and inner surface 322. In various embodiments, thermal wool 350 is in contact with the entire inner surface 312 and the entire inner surface 322, though in various embodiments, thermal wool 350 is in contact with only a portion of inner surface 312 and only a portion of inner surface 322. Thermal wool 350 may comprise a first surface 352 and a second surface 354. First surface 352 may be in contact with inner surface 312. Second surface 354 may be in contact with inner surface 322. Thermal wool 350 may be configured to minimize heat transfer between first metallic plate 310 and second metallic plate 320. Stated another way, thermal communication between first metallic plate 310 and second metallic plate 320 may be minimized via thermal wool 350. In this regard, thermal wool 350 may comprise a high temperature mineral wool insulation material, or any other high temperature insulating material.

Inner surface 312 may be the same size as inner surface 322. Stated another way, the geometry of inner surface 312 may be similar to the geometry of inner surface 322. Stated yet another way, the surface area of inner surface 312 may be similar to the surface area of inner surface 322. Similarly, first surface 352 and inner surface 312 may comprise similar surface areas. Furthermore, second surface 354 and inner surface 322 may comprise similar surface areas. In this regard, the geometry of inner surface 312, first surface 352, second surface 354, and inner surface 322 may be similar. In this manner, first metallic plate 310, thermal wool 350, and second metallic plate 320 may be flush relative to one another at the outer side 234 of thermal washer 230, as illustrated in FIG. 3B. Stated another way, the outer sides of first metallic plate 310, second metallic plate 320, and thermal wool 350 may be aligned.

A first aperture 332 may be disposed in thermal washer 230. First aperture 332 may extend through first metallic plate 310, second metallic plate 320, and thermal wool 350. First aperture 332 may have a first centerline axis A₁-A₁' being substantially perpendicular to first metallic plate 310 and, similarly, perpendicular to second metallic plate 320. A second aperture 334 may be disposed in thermal washer 230. Second aperture 334 may extend through first metallic plate 310, second metallic plate 320, and thermal wool 350. Second aperture 334 may have a second centerline axis A₂-A₂' being substantially perpendicular to first metallic plate 310 and, similarly, perpendicular to second metallic plate 320. With momentary reference to FIG. 2, first fastener 242 may be located at least partially within first aperture 332. Second fastener 244 may be located at least partially within second aperture 334. In this regard, thermal wool 350 may be held to first plate 310 and second plate 320 via friction, in accordance with various embodiments. For example, thermal wool 350 may be compressed between first plate 310 and second plate 320. Thermal wool 350 may be compressed between first plate 310 and second plate 320 in response to at least one of first fastener 242 (see FIG. 2) or second fastener 244 (see FIG. 2) being tightened. However, in various embodiments, thermal wool 350 may be held to first plate 310 and/or second plate 320 via an adhesive.

In various embodiments, first metallic plate 310, second metallic plate 320, and thermal wool 350 may comprise similar geometries. First metallic plate 310, second metallic plate 320, and thermal wool 350 may comprise similar widths. First metallic plate 310, second metallic plate 320, and thermal wool 350 may comprise a width W. First metallic plate 310, second metallic plate 320, and thermal wool 350 may comprise similar lengths. First metallic plate 310, second metallic plate 320, and thermal wool 350 may comprise a length L. First metallic plate 310, second metallic plate 320, and thermal wool 350 may comprise a substantially rectangular geometry. First metallic plate 310, second metallic plate 320, and thermal wool 350 may comprise rounded corners as illustrated in FIG. 3B.

First metallic plate 310 may comprise a thickness T₁. Second metallic plate may comprise a thickness T₂. Thickness T₁ may be similar to thickness T₂. Thermal wool 350 may comprise a thickness T₃. In various embodiments, thickness T₃ may be greater than thickness T₁. In various embodiments, thickness T₃ may be between 100% and 2,000% of thickness T₁. In various embodiments, thickness T₃ may be between 400% and 1,000% of thickness T₁.

With reference to FIG. 1, FIG. 2, and FIG. 3A, first metallic plate 310 may be in contact with duct 70, via an attachment feature (i.e., attachment feature 240). Thus, first metallic plate 310 may be in thermal communication with duct 70, via an attachment feature (i.e., attachment feature 240), such that heat may be transferred conductively there between. Second metallic plate 320 may contact composite member 220. Thus, second metallic plate 320 may be in thermal communication with composite member 220, such that heat may be transferred conductively there between.

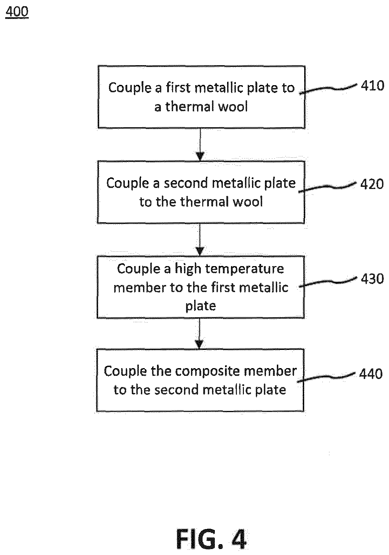

With reference to FIG. 4, a method 400 for thermally insulating a high temperature member from a composite member is provided, in accordance with various embodiments. Method 400 may include coupling a first metallic plate to a thermal wool, in step 410. Method 400 may include coupling a second metallic plate to the thermal wool, in step 420. Method 400 may include coupling a high temperature member to the first metallic plate, in step 430. Method 400 may include coupling the composite member to the second metallic plate, in step 440.

With additional reference to FIGs. 1-3, step 410 may include coupling first metallic plate 310 to thermal wool 350. Step 420 may include coupling second metallic plate 320 to thermal wool 350. Step 430 may include coupling a high temperature member (i.e., duct 70, via attachment feature 240) to first metallic plate 310. Step 440 may include coupling composite member 220 to second metallic plate 320.

In various embodiments, coupling composite member 220 to second metallic plate 320 may include inserting a fastener (i.e., first fastener 242 and/or second fastener 244) into an aperture (i.e., first aperture 332 or second aperture 334).

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Systems, methods and apparatus are provided herein. In the detailed description herein, references to "one embodiment", "an embodiment", "various embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. No claim element is intended to invoke 35 U.S.C. 112(f) unless the element is expressly recited using the phrase "means for." As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A thermal washer (230) comprising:
a first metallic plate (310) having a first inner surface (312) and a first outer surface (314);
a second metallic plate (320) having a second inner surface (322) and a second outer surface (324), the second metallic plate (320) being oriented substantially parallel to the first metallic plate (310) such that the first inner surface (312) and the second inner surface (322) are separated by a gap; and
a thermal wool (350) having a first surface (352) and a second surface (354), the first surface (352) being in contact with the first inner surface (312) and the second surface (354) being in contact with the second inner surface (322), the thermal wool (350) filling a void between the first inner surface (312) and the second inner surface (322), wherein a width of the thermal wool (350) is substantially equal to a width of the first metallic plate (310) and a length of the thermal wool (350) is substantially equal to a length of the first metallic plate (310).

2. The thermal washer (230) of claim 1, wherein the thermal wool (350) comprises:
a high temperature mineral wool insulation; and/or
a semi-rigid sheet.

3. The thermal washer (230) of claim 1 or 2, wherein the first metallic plate (310) and the second metallic plate (320) comprise aluminum.

4. The thermal washer (230) of any preceding claim, wherein the first metallic plate (310) is coupled to the thermal wool (350) via an adhesive and the second metallic plate (320) is coupled to the thermal wool (350) via the adhesive.

5. The thermal washer (230) of any preceding claim, wherein a width of the second metallic plate (320) is substantially equal to the width of the first metallic plate (310) and a length of the second metallic plate (320) is substantially equal to the length of the first metallic plate (310).

6. The thermal washer (230) of any preceding claim, wherein a thickness of the thermal wool (350) is between 100% and 2,000% of a thickness of the first metallic plate (310).

7. A fan case arrangement (200) comprising:
a composite fan case (74);
a composite member (220) coupled to the composite fan case (74);
a duct (70) for directing a hot fluid; and
a thermal washer (230) comprising:
a first metallic plate (310);
a second metallic plate (320); and
a thermal wool (350) located between the first metallic plate (310) and the second metallic plate (320), the thermal wool (350) being flush with first metallic plate (310) and second metallic plate (320) at an outer side of the thermal washer (230), the thermal washer (230) being coupled between the composite member (220) and the duct (70).

8. The fan case arrangement (200) of claim 7, wherein the first metallic plate (310) has a first inner surface (312) and a first outer surface (314), the second metallic plate (320) has a second inner surface (322) and a second outer surface (324), the second metallic plate (320) being oriented substantially parallel to the first metallic plate (310) such that the first inner surface (312) and the second inner surface (322) are separated by a gap, and the thermal wool (350) is in contact with the first inner surface (312) and the second inner surface (322), the thermal wool (350) filling a void between the first inner surface (312) and the second inner surface (322).

9. The fan case arrangement (200) of claim 7 or 8, wherein a thermal communication between the first metallic plate (310) and the second metallic plate (320) is minimized via the thermal wool (350), and optionally wherein the first metallic plate (310) is in thermal communication with the duct (70) and the second metallic plate (320) is in thermal communication with the composite member (320).

10. The thermal washer (230) or fan case arrangement (200) of any preceding claim, wherein a first aperture (332) is disposed in the thermal washer (230), the first aperture (332) having a first centerline axis being substantially perpendicular to the first metallic plate (310) and the second metallic plate (320), and optionally wherein a second aperture (334) is disposed in the thermal washer (230), the second aperture (334) having a second centerline axis being substantially perpendicular to the first metallic plate (310) and the second metallic plate (320).

11. The fan case arrangement (200) of any preceding claim, further comprising:
an attachment feature (240) for attaching the duct (70) to the composite member (220), the attachment feature (76) being coupled between the duct (70) and the thermal washer (230); and/or
a fastener (242, 244) located at least partially within a or the first aperture (332) and/or a or the second aperture (334) to fasten the duct (70) to the composite member (220).

12. The fan case arrangement (200) of any preceding claim, wherein the composite member (220) comprises a fan case boss.

13. A method (400) for thermally insulating a high temperature member from a composite member (220) comprising:
coupling a first metallic plate (310) to a thermal wool (350);
coupling a second metallic plate (320) to the thermal wool (350) to form a thermal washer (230);
coupling the high temperature member to the first metallic plate (310); and
coupling the composite member (220) to the second metallic plate (320).

14. The method (400) of claim 13, wherein coupling the high temperature member to the first metallic plate (310) and/or coupling the composite member (220) to the second metallic plate (320) comprises inserting a fastener (242, 244) into an aperture (332, 334) disposed in the thermal washer (230).

15. The method (400) of claim 13 or 14, wherein the coupling the second metallic plate (320) to the thermal wool (350) comprises coupling the second metallic plate (320) to a second surface (354) of the thermal wool (350), the first metallic plate (310) being coupled to a first surface (352) of the thermal wool (350), the first surface (352) and the second surface (354) being located on opposite sides of the thermal wool (350).
